# EUROPÄISCHE PATENTSCHRIFT

(11) **EP 3 218 136 B1**
(45) Veröffentlichungstag und Bekanntmachung des Hinweises auf die Patenterteilung: **01.01.2020**
(21) Anmeldenummer: 15805118.5
(22) Anmeldetag: 12.11.2015
(51) Int. Cl.: B23K 20/00, B23K 20/26, B23K 20/12

(54) **PRESSSCHWEISSVORRICHTUNG UND PRESSSCHWEISSVERFAHREN**
PRESSURE WELDING DEVICE AND PRESSURE WELDING METHOD
DISPOSITIF ET PROCÉDÉ DE SOUDAGE PAR PRESSION

(30) Priorität: 12.11.2014 DE 202014105435 U
(43) Veröffentlichungstag der Anmeldung: 20.09.2017
(73) Patentinhaber: KUKA Deutschland GmbH, 86165 Augsburg (DE)
(72) Erfinder: BÜCHLER, Michael, 86179 Augsburg (DE); FISCHER, Otmar, 86150 Augsburg (DE); MEYER, Harald, 86199 Augsburg (DE); SCHNEIDER, Klaus, 86316 Friedberg (DE)
(74) Vertreter: Ernicke, Klaus Stefan
(86) Internationale Anmeldenummer: PCT/EP2015/076410
(87) Internationale Veröffentlichungsnummer: WO 2016/075223

(56) Entgegenhaltungen:
- WO-A1-86/05134
- DE-A1- 1 527 401
- DE-A1- 2 056 003
- DE-A1- 2 647 735
- DE-U1-202004 010 386
- JP-A- 2011 025 281
- US-A1- 2009 200 356

## Beschreibung

Die Erfindung betrifft eine Pressschweißvorrichtung und ein Pressschweißverfahren. mit den Merkmalen im Oberbegriff des Verfahrens- und Vorrichtungshauptanspruchs.

Aus der US 2009/0200356 A1 ist eine Reibschweißvorrichtung bekannt, die eine Reib- und Plastifizierungseinrichtung, ein Maschinengestell und eine daran ortsfest montierte Staucheinrichtung aufweist. An einem ersten und einem zweiten Halter sind Bauteilaufnahmen angeordnet. Der zweite Halter ist am Maschinengestell beweglich gelagert und wird von der Staucheinrichtung längs der Maschinenachse bewegt. Am zweiten Halter sind ein Spindelstock und ein Spindelmotor seitlich angeordnet und starr befestigt. Sie werden vom zweiten Halter bei der Vorschubbewegung mitgenommen, wobei die Massen permanent gekoppelt sind.

Die WO 86/05134 A1 zeigt eine Doppelkopf-Reibschweißmaschine, bei der ein gemeinsamer Antriebsmotor für die beiden Spindeln und deren Spannfutter vorhanden ist. Die Spindeln sind in den beim Reibschweißprozess stationär angeordneten Maschinenköpfen jeweils mittels dortiger Schiebelager längs verschieblich gelagert. Der Spindelantrieb ist stationär am Maschinengestell angeordnet.

Die DE 26 47 735 A betrifft eine Reibschweißmaschine, der der die Antriebsmotoren der Spindelantriebe jeweils auf dem Maschinenkopf montiert sind und werden mit diesem gemeinsam mittels Hydraulikzylinder verschoben werden.

Eine andere Pressschweißvorrichtung ist aus der Praxis bekannt. Sie kann als Reibschweißvorrichtung oder als Schweißvorrichtung mit einem magnetisch umlaufend bewegten Lichtbogen ausgebildet sein und weist in beiden Varianten jeweils eine Plastifizierungseinrichtung und eine Staucheinrichtung sowie Bauteilaufnahmen für die zu verschweißenden Bauteile auf. Sie besitzt ferner ein Maschinengestell, an dem ein Maschinenkopf mit einer drehbaren Spindel, einem Spindelantrieb und einer Bauteilaufnahme beweglich angeordnet ist.

Es ist Aufgabe der vorliegenden Erfindung, eine verbesserte Pressschweißtechnik aufzuzeigen.

Die Erfindung löst diese Aufgabe mit den Merkmalen im Verfahrens- und Vorrichtungshauptanspruch.

Die beanspruchte Pressschweißtechnik, d.h. die Pressschweißvorrichtung und das Pressschweißverfahren, haben verschiedene Vorteile. Sie bieten einerseits eine Steigerung der Leistungsfähigkeit und der Prozessqualität beim Pressschweißen. Andererseits kann der Automatisierungsgrad und damit auch die Wirtschaftlichkeit verbessert werden. Rüst- und Stillstandszeiten können weitgehend vermieden oder zumindest reduziert werden. Zudem wird die Ergonomie verbessert.

Die beanspruchte Massenentkopplung hat den Vorteil, dass beim Prozesshub die bewegte Masse signifikant verringert und auf den Maschinenkopf reduziert werden kann. Dies kommt der Hubpräzision und der Schweißqualität zugute und ist insbesondere für diffizile Schweißprozesse von Vorteil, die eine exakte Steuerung bzw. Regelung der Bauteilvorschubs erfordern. Mittels einer axialtoleranten Kupplung kann das drehende Antriebsmoment weiterhin auf den abgekoppelten Maschinenkopf übertragen werden.

Der Spindelantrieb ist beweglich, insbesondere längs der Maschinenachse verfahrbar, am Maschinengestell gelagert. Er kann beim Zustellhub vom Maschinenkopf mitgenommen werden. Die Massenentkopplung und die Abstandsänderung finden bevorzugt erst beim Prozesshub statt. Dies bewirkt eine Begrenzung der Abstandsänderung sowie der Auszuglänge der axialtoleranten Kupplung und ist günstig für die verlustfreie Übertragung des Antriebsmoments.

Mit einem Bewegungsaufnehmer, insbesondere einem Beschleunigungssensor, kann das Bewegungsverhalten des Maschinenkopfs im Prozess detektiert werden. Dies erlaubt eine Überwachung und Regelung der dynamischen Verhältnisse im Pressschweißprozess.

Der Maschinenkopf wird von einem Stauchantrieb bewegt. Dieser bewirkt den Zustell- und Prozesshub und kann in beliebig geeigneter Weise ausgebildet sein.

Die Staucheinrichtung ist mit einem zwischen dem Maschinenkopf und dem Stauchkopf angeordneten und auf Zug wirkenden Stauchantrieb modifiziert. Dieser weist zwei oder mehr parallele Zylinder auf, die längs und beidseitig neben der Maschinenachse angeordnet sind. Vorzugsweise sind die Zylindergehäuse am Maschinenkopf abgestützt und die ausfahrbahren Kolbenstangen an ihrem freien Ende mit dem Stauchkopf fest verbunden. Die Stauchkräfte werden hierdurch in knickgünstiger Weise als Zugkräfte und nicht mehr als Druckkräfte wie beim Stand der Technik übertragen.

Die Pressschweißvorrichtung weist eine Plastifizierungseinrichtung und eine Staucheinrichtung sowie eine Halterung, insbesondere Bauteilaufnahmen, für die zu verschweißenden Bauteile und ein Maschinengestell sowie einen Maschinenkopf und einen Stauch- oder Stützkopf auf, die längs einer Maschinenachse am Maschinengestell relativ zueinander beweglich sind, wobei die Staucheinrichtung einen zwischen dem Maschinenkopf und dem Stauch- oder Stützkopf angeordneten und auf Zug wirkenden Stauchantrieb mit zwei oder mehr parallelen Antriebseinheiten aufweist, die längs und beidseitig neben der Maschinenachse angeordnet sind. Der Maschinenkopf ist beweglich am Maschinengestell angeordnet, wobei der Stauch- oder Stützkopf gestellfest angeordnet ist. Ferner weist der Maschinenkopf eine drehbare Spindel und eine Bauteilaufnahme sowie einen zugehörigen Spindelantrieb auf.

Dies erlaubt außerdem einen Kraftfluss in einem geschlossenen Kreis und zwischen dem Maschinenkopf und dem Stauchkopf, was für eine verbesserte Kraftabstützung sorgt und unerwünschte Verformungen vermeidet sowie das Maschinengestell entlastet. Durch die unterschiedlichen Höhenlagen der Zylinder, insbesondere ihrer Kolbenstangen, kann die Ergonomie und die Zugänglichkeit am Bedienbereich bzw. an der Bedienseite der Pressschweißvorrichtung verbessert werden.

Für die Pressschweißvorrichtung können weitere vorteilhafte Ergänzungen durch Zusatzkomponenten vorgenommen werden.

Dies betrifft z.B. eine im Antriebsstrang zwischen Spindelantrieb und Spindel angeordnete Betätigungseinrichtung für eine Spanneinrichtung an der Bauteilaufnahme des Maschinenstocks bzw. Spindelstocks. Hierbei kann das Antriebsmoment über das Antriebsgehäuse eines Betätigungsantriebs weitestgehend verformungsfrei übertragen werden. Somit lassen sich auch sehr hohe Momente in Verbindung mit einer Spannvorrichtungsbetätigung übertragen.

Die Betätigungseinrichtung kann kompakt und leichtgewichtig ausgeführt sein, so dass sie dem Maschinenkopf zugeordnet und mit diesem zusammen ohne Einbußen an Prozess- und Schweißqualität bewegt werden kann. Sie vereinfacht außerdem die Ausbildung der Bauteilaufnahme und reduziert deren Gewicht. Dies alles ist besonders in Verbindung mit der Massenentkopplung von Vorteil für die Schweiß- und Prozessqualität.

Andererseits ist ein Direktantrieb möglich, bei dem der Antriebsmotor mit seiner Motorachse im wesentlichen fluchtend mit der Spindelachse ausgerichtet werden kann. Durch die Trennung der Betätigungseinrichtung vom Antriebsmotor kann dieser in beliebiger Weise ausgebildet sein. Dies ermöglicht den Einsatz von kostengünstigen Standardmotoren. Außerdem ist ein Direktantrieb für verfahrbare Maschinenköpfe und für die Massenentkopplung besonders günstig.

Der Direktantrieb spart das in vielen Fällen bisher übliche Vorgelege mit einem Riementrieb ein. Die Einleitung von Querkräften auf den Antriebsstrang kann vermieden werden. Die Verschleißanfälligkeit wird deutlich gemindert.

Die Betätigungseinrichtung hat außerdem Vorteile für die Betriebsmittelzuführung. Hierfür kann eine Drehzuführung vorgesehen sein, die an das oder die jeweiligen Betriebsmittel angepasst werden kann. Die Drehzuführung baut sehr kompakt und hat Vorteile für die LeckölRückführung. Sie kann ebenfalls zwischen dem Spindelantrieb und dem Maschinenstock angeordnet sein. Dies hat außerdem den Vorteil einer guten Zugänglichkeit für Montage-, Inspektions- und Wartungszwecke.

Die Pressschweißvorrichtung kann in unterschiedlicher Weise ausgebildet sein. Sie kann z.B. als Reibschweißvorrichtung ausgeführt sein. Die Bauteile werden dabei vorzugsweise längs der Maschinenachse ausgerichtet und an ihren einander zugekehrten Stirnrändern durch Reiben plastifiziert und durch anschließendes axiales Stauchen miteinander verbunden. Die Maschinenachse bildet die Prozessachse. Alternativ ist ein Pressschweißen mit einem umlaufend bewegten Lichtbogen möglich. Der Lichtbogenumlauf kann hierbei durch eine Treibeinrichtung gesteuert werden. Eine solche Pressschweißvorrichtung kann ebenfalls eine drehbare Bauteilaufnahme am Maschinenkopf aufweisen.

Außerdem können im Antriebsstrang weitere Komponenten untergebracht werden, z.B. eine Lammellenbremse und eine Drehkupplung zum Ausgleich von Fluchtungsfehlern. Zudem kann eine Messeinrichtung für das Antriebs-Drehmoment und ggf. die Drehzahl implementiert werden.

Ferner ist es möglich, den Antriebsmotor mit einer Schwungscheibenanordnung zu kombinieren, die vom Maschinenkopf aus gesehen vor oder hinter dem Antriebsmotor sitzen kann. Es ergibt sich eine wesentlich größere Bandbreite und Gestaltungsfreiheit für den Spindelantrieb. Dies ermöglicht außerdem eine Anpassung an unterschiedliche Maschinen- und Betriebs- oder Prozesserfordernisse.

Die beanspruchte Massenentkopplung hat außerdem Vorteile für die Anordnung und Funktion weiterer Komponenten der Pressschweißvorrichtung.

Eine Stelleinrichtung erlaubt eine einfache und schnelle Anpassung der Pressschweißvorrichtung an unterschiedliche Bauteilmaße, insbesondere Bauteillängen. Diese Anpassung betrifft insbesondere die zwischen Maschinenkopf und Stauchkopf schwimmfähig angeordnete Bauteilaufnahme. Sie kann automatisch erfolgen.

Mit der Stelleinrichtung wird auch eine Optimierung des Pressschweißprozesses und eine optimale Kontaktierung der zu verschweißenden Bauteile und des Stauchkopfes erreicht. Dies ist auch für die Optimierung der Prozessabläufe, insbesondere eine programmierte Steuerung der Plastifizierungs- und Stauchphasen sowie der dabei eintretenden Vorschübe und Bauteilverkürzungen von Vorteil. Dadurch können Schweißteile mit sehr hoher Qualität hergestellt werden. Dies betrifft einerseits die Qualität der Schweißverbindung und andererseits die gleichbleibende Länge der Schweißteile.

Ferner kann eine Bearbeitungseinrichtung vorgesehen sein, die eine Nachbearbeitung des Schweißteils in Aufnahmeoder Spannstellung an der Pressschweißvorrichtung erlaubt. Eine Bearbeitung erfolgt zum Beispiel an der oder den Schweißstellen, wobei der dortige ringförmige Schweißwulst entfernt wird. Dies ist effektiv und spart Zeit, zusätzlichen Aufwand und Kosten. Die Schweißstelle befindet sich häufig in unmittelbarer Nähe des Maschinenkopfes und der dortigen Bauteilaufnahme, was zu Platzproblemen führen kann. Die besagte Stelleinrichtung erlaubt eine Abstandsbildung zwischen dem Maschinenkopf und der zugeordneten weiteren Bauteilaufnahme, wodurch ausreichend Platz für die Bearbeitung und eine gute Zugänglichkeit zur Bearbeitungsstelle, insbesondere zur Schweißstelle, geschaffen wird.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Pressschweißvorrichtung mit einer Massenentkopplung in einer perspektivischen Seitenansicht,
- Figur 2:: die Pressschweißvorrichtung von Figur 1 im Längsschnitt,
- Figur 3:: eine Variante der Pressschweißvorrichtung von Figur 1 in einer perspektivischen Seitenansicht,
- Figur 4:: eine perspektivische Seitenansicht des Maschinenkopfs, des Spindelantriebs und der Massenentkopplung der Pressschweißvorrichtung von Figur 1 und 3 in einer ersten Betriebstellung,
- Figur 5:: die Anordnung von Figur 4 in einer anderen Betriebstellung und,
- Figur 6:: eine vergrößerte Darstellung des Details VI von Figur 2 mit dem Maschinenkopf, dem Spindelantriebs und der Massenentkopplung.

Die Erfindung betrifft eine Pressschweißvorrichtung (1) und ein Pressschweißverfahren.

Die Pressschweißvorrichtung (1) und das Pressschweißverfahren können unterschiedlich ausgebildet sein. Gemeinsam ist den verschiedenen Varianten eine Plastifizierungseinrichtung (7) und eine Staucheinrichtung (8), mit der die zu verschweißenden Bauteile (2, 3, 3', 4) an den einander zugekehrten Seiten oder Rändern aufgeschmolzen oder erweicht und anschließend unter Bildung eines Schweißteils (5, 5') gestaucht werden. Die Staucheinrichtung (8) weist hierfür einen Stauchantrieb (22) auf, der die Bauteile (2, 3, 3', 4) relativ zueinander bewegt.

Die Pressschweißvorrichtung (1) weist ferner eine Maschinen- und Prozesssteuerung (nicht dargestellt) auf, die mit den nachfolgend beschriebenen Maschinenkomponenten verbunden ist und diese steuert. Die Maschinen- und Prozesssteuerung ist außerdem mit den nachgenannten Erfassungs-, Detektions- oder Messeinrichtungen verbunden und verarbeitet deren Signale. Sie kann speicherprogrammierbar ausgebildet sein und ein oder mehrere Prozess- oder Ablaufprogramme, eine Technologiedatenbank, Datenspeicher für Programme und aufgenommene Prozessdaten, eine Qualitätsüberwachung nebst Protokollierung oder dgl. beinhalten.

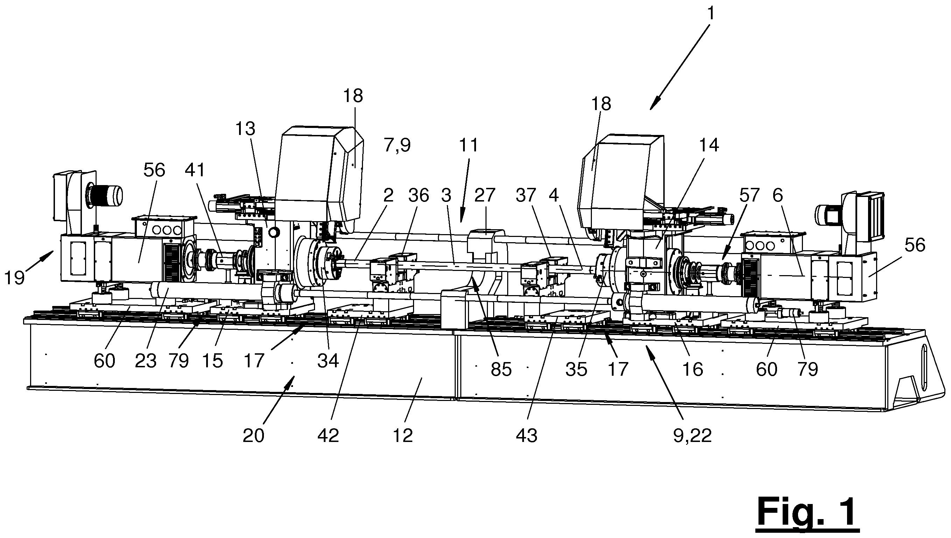

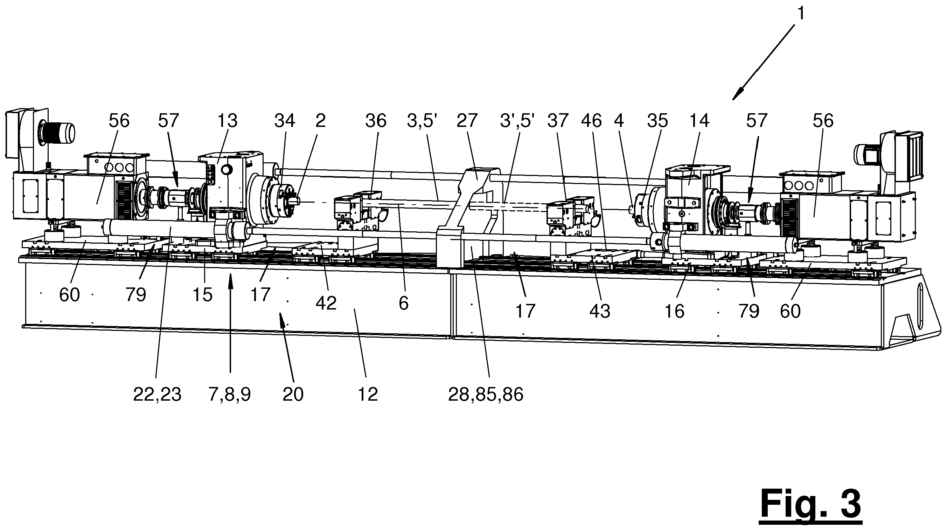

Die Plastifizierungseinrichtung (7) und das Plastifizierungsverfahren können unterschiedlich ausgebildet sein. Bei den in Figur 1 und 3 gezeigten Ausführungsformen ist die Pressschweißvorrichtung (1) als Reibschweißvorrichtung ausgebildet, wobei die Plastifizierungseinrichtung (7) eine Reibeinrichtung (9) aufweist.

In einer nicht dargestellten Variante kann die Plastifizierungseinrichtung (7) eine Lichtbogeneinrichtung aufweisen, welche die Bauteilränder mit einem Lichtbogen erwärmt und angeschmilzt, wobei der Lichtbogen mittels einer Treibeinrichtung entlang des Bauteilumfangs umlaufend mit Magnetkraft bewegt wird.

Die Pressschweißvorrichtung (1) weist in den verschiedenen Varianten jeweils ein Maschinengestell (12) mit einer Längs- oder Maschinenachse (6) und eine Halterung (11) mit Bauteilaufnahmen (34,35,36,37) für die zu verschweißenden Bauteile (2, 3, 3', 4) auf. Das Maschinengestell (12) hat ein flurgebundenes Maschinenbett, auf dem die nachfolgend erläuterten Komponenten der Pressschweißvorrichtung (1) angeordnet sind. Ferner ist eine Betriebsmittelversorgung (19) vorhanden. Sie stellt die benötigten Betriebsmittel, insbesondere elektrischen Strom, Hydraulikflüssigkeit, Druckluft, Schmier- und Kühlmittel oder dgl. zur Verfügung und leitet sie zu den jeweiligen Verbrauchern.

Die Pressschweißvorrichtung (1) hat ein umgebendes schützendes Gehäuse mit einem verschließbaren Zugang an der Bedienseite (20). Hier kann ein Werker oder ein Roboter die zu fügenden Bauteile (2, 3, 3', 4) zuführen und das fertige Schweißteil (5,5') abführen.

Das Pressschweißen der Bauteile (2, 3, 3', 4) erfolgt in Richtung der Maschinenachse (6), entlang der auch die Bauteile (2, 3, 3', 4) ausgerichtet sind. Die Bauteile (2, 3, 3', 4) werden dabei an den einander zugekehrten Stirnseiten oder Rändern plastifiziert, insbesondere durch rotierendes Reiben oder durch den umlaufenden Lichtbogen, und entlang der Maschinenachse (6) gestaucht. Die Maschinenachse (6) bildet die Prozessachse für das Plastifizieren und Stauchen.

Die Bauteile (2, 3, 3', 4) können aus unterschiedlichen Werkstoffen bestehen. Vorzugsweise kommen metallische Werkstoffe, insbesondere Stahl, Leichtmetalllegierungen, Gusslegierungen oder dergleichen zum Einsatz. Die Werkstoffpaarungen können unterschiedlich sein. Hierbei können insbesondere eisenhaltige Werkstoffe mit Nichteisenmetallen gefügt werden. Außerdem können nichtmetallische Werkstoffe, z.B. Keramikwerkstoffe geschweißt werden, insbesondere in Verbindung mit einem anderen metallischen Bauteil.

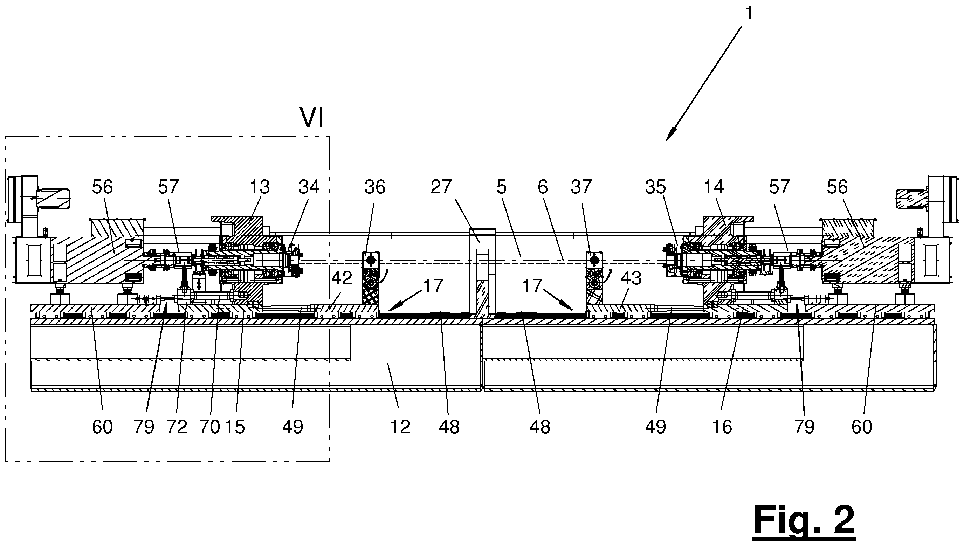

Figur 1 und 2 zeigen eine erste Variante der Pressschweißvorrichtung (1) in Form einer Doppelkopfmaschine, in der zwei äußere Bauteile (2, 4) bevorzugt gleichzeitig an die Enden eines zentralen Bauteils (3) geschweißt werden. Hierdurch entsteht ein dreiteiliges Schweißteil (5).

In Figur 3 ist eine zweite Variante dargestellt, die als doppelte Einkopfmaschine ausgebildet ist, in der endseitige Bauteile (2, 4) jeweils an ein Bauteil (3, 3') geschweißt werden, wobei zweiteilige Schweißteile (5') entstehen. Diese beiden Schweißprozesse können unabhängig voneinander ablaufen. Ferner ist eine nicht dargestellte Ausbildung der Pressschweißvorrichtung (1) als einfache Einkopfmaschine möglich, die sich z.B. als Abwandlung, insbesondere Halbierung, der Pressschweißvorrichtung (1) von Figur 3 darstellt.

In den verschiedenen Varianten weist die Pressschweißvorrichtung (1) jeweils mindestens einen Maschinenkopf (13, 14) mit einer Bauteilaufnahme (34, 35) auf, der beweglich am Maschinengestell (12) angeordnet ist. Der Maschinenkopf (13, 14) kann ebenfalls eine Erfassungseinrichtung für Weg und/oder Position aufweisen.

Bei den Varianten von Figur 1 und 3 der Doppelkopfmaschine oder doppelten Einkopfmaschine sind zwei Maschinenköpfe (13, 14) einander an der Maschinenachse (6) gegenüberliegend am Maschinengestell (12) beweglich angeordnet. Bei der vorerwähnten Einkopfmaschine ist nur ein beweglicher Maschinenkopf (13) vorgesehen. In anderen Varianten kann die Maschinenkopfzahl auch größer als zwei sein. Die mehrfachen Maschinenköpfe (13, 14) sind bevorzugt gleichartig ausgebildet, können alternativ aber auch unterschiedlich sein.

Der oder die Maschinenköpfe (13, 14) sind jeweils beweglich, insbesondere axial verfahrbar gegenüber dem Maschinengestell (12), insbesondere dessen Maschinenbett, gelagert. Sie sind hierfür z.B. auf einem Träger (15, 16) angeordnet, der mittels einer längs der Maschinenachse (6) ausgerichteten Führung (32) am Maschinenbett längs der Maschinenachse (6) verfahrbar geführt und abgestützt ist.

Der Maschinenkopf (13, 14) wird jeweils vom Stauchantrieb (22) bewegt. In den gezeigten Ausführungsbeispielen von Figur 1 und 3 ist jedem Maschinenkopf (13, 14) ein eigener Stauchantrieb (22) zugeordnet. Dieser kann sich jeweils an einem zentralen und am Maschinengestell (12) stationär angeordneten Stauchkopf oder Stützkopf (27) abstützen. Ein solcher stationärer Stauch- oder Stützkopf (27) kann auch bei einer Einkopfmaschine vorhanden sein. Bei einer Variante der Pressschweißvorrichtung (1), z.B. einer Doppelkopfmaschine, kann auch ein für beide Maschinenköpfe (13, 14) gemeinsamer Stauchantrieb (22) zum Einsatz kommen. In der bevorzugten und nachfolgend näher erläuterten Ausführungsform entwickelt der Stauchantrieb (22) Zugkräfte.

Die Pressschweißvorrichtung (1), insbesondere die Reibeinrichtung (9) weist in den gezeigten Ausführungsbeispielen am Maschinenkopf (13, 14) jeweils eine drehbare Welle (54), die nachfolgend als Spindel bezeichnet wird, eine frontseitig an der Spindel (54) angeordnete Bauteilaufnahme (34, 35), einen Spindelstock und einen Spindelantrieb (56) auf. Der Spindelstock (53) beinhaltet die Lagerung, Führung und Abstützung der Spindel (54) und ist am Maschinenkopf (13, 14) angeordnet und abgestützt. Zwischen der Bauteilaufnahme (34, 35) und dem Spindelantrieb (56) befindet sich ein Antriebsstrang (57), der sich längs der Maschinenachse (6) erstreckt und mit dieser vorzugsweise fluchtet.

Der Maschinenkopf (13, 14) und der zugehörige Spindelantrieb (56) sind getrennt voneinander angeordnet und jeweils eigenständig am Maschinengestell (12) gelagert. Sie sind in Richtung der Maschinenachse (6) mit Abstand hintereinander angeordnet. Zwischen dem Maschinenkopf (13, 14) und dem zugehörige Spindelantrieb (56) ist eine steuerbare Massenentkopplung (79) angeordnet.

Eine solche Anordnung kann auch bei der vorgenannten Variante der Plastifizierungseinrichtung (7) mit einer Lichtbogeneinrichtung vorhanden sein.

Der Spindelantrieb (56) ist in der gezeigten Ausführungsform als Direktantrieb ausgebildet. Er weist einen Antriebsmotor (58) auf, dessen Motorwelle (59) im Wesentlichen fluchtend zur Längsachse der Spindel (54) und zur Maschinenachse (6) ausgerichtet ist. Die Motorwelle (59) ist über eine Kupplung (62) mit der Spindel (54) oder einer nachfolgend erläuterten Betätigungseinrichtung (41) für die Bauteilaufnahme (34) gekoppelt. Die Kupplung (62) ist drehfest und biegelastisch ausgebildet. Sie kann evtl. Fluchtungsfehler, insbesondere Seitenversatz und/oder Schrägstellung, ausgleichen. Ferner kann im Antriebsstrang (57) eine steuerbare Bremse (nicht dargestellt) befinden.

Alternativ kann der Antriebsmotor seitlich versetzt von der Spindel (54) sowie der Maschinenachse (6) angeordnet sein und über ein Vorgelege, insbesondere einen Riementrieb, die Spindel (54) antreiben.

In einer weiteren Abwandlung kann der Spindelantrieb (56) eine Schwungscheibenanordnung (nicht dargestellt) aufweisen. Die Schwungscheiben werden vom Antriebsmotor (58) in Rotation um die Maschinenachse (6) versetzt und bewirken dann einen Trägheitsantrieb für die Spindel (54), wobei eine steuerbare Bremse die Drehzahl im Antriebsstrang (57) steuern oder regeln und ggf. die Drehung auch stillsetzen kann. Mittels einer Kupplung kann die Schwungscheibenanordnung vom Antriebsmotor (58) und ggf. von der Spindel (54) getrennt werden.

Der Spindelantrieb (56) ist in den gezeigten Ausführungsbespielen auf einem schlittenartigen Antriebsträger (60) angeordnet und axial verfahrbar am Maschinengestell (12) gelagert. Er kann dabei auf der gleichen Führung (32) wie der zugehörige Maschinenkopf (13, 14) gelagert und geführt sein. Wenn eine Schwungscheibenanordnung vorhanden ist, kann diese ebenfalls auf dem Antriebsträger (60) angeordnet sein.

Die steuerbare Massenentkopplung (79) kann den vom Stauchantrieb (22) bewegten Maschinenkopf (13, 14) bei seinem axialen Vorschub längs der Maschinenachse (6) bedarfsweise mit dem Spindelantrieb (56) koppeln oder entkoppeln. Im Kopplungszustand wird die Masse des Spindelantriebs (56) und seines Antriebsträgers (60) sowie ggf. der Schwungscheibenanordnung und weiterer Komponenten beim Vorschub mitbewegt. Im Entkopplungszustand geschieht diese Mitnahme nicht. Die Kopplung erfolgt bevorzugt mechanisch. Die Massenentkopplung (79) kann über die besagte Maschinensteuerung gesteuert werden.

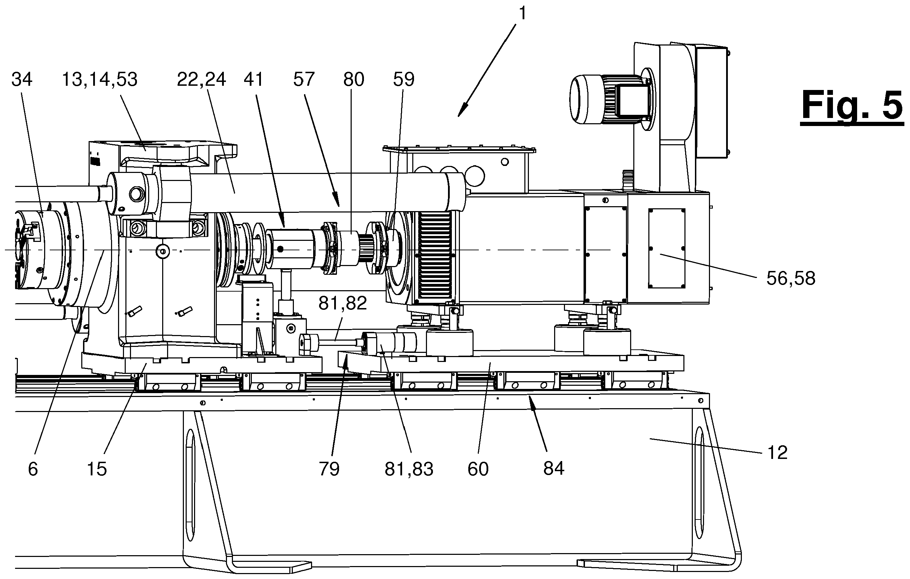

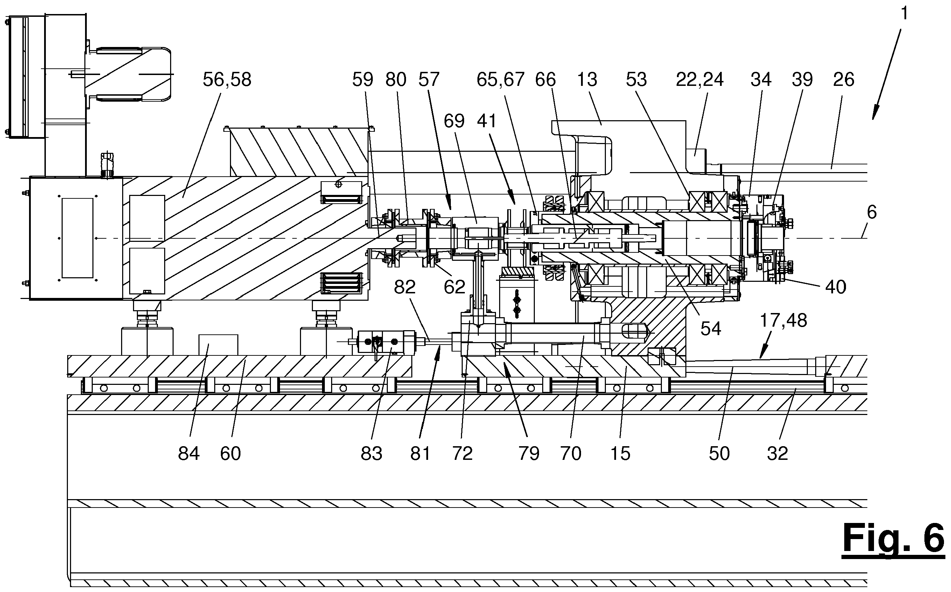

Der Maschinenkopf (13, 14) und der zugehörige Spindelantrieb (56) sind durch den besagten Antriebsstrang (57) axial verbunden. Die Massenentkopplung (79) weist eine axialtolerante Kupplung (80) im Antriebsstrang (57) auf. Die axialtolerante Kupplung (80) wird auch als Schubgelenk bezeichnet. Sie kann für eine Aufrechterhaltung des drehenden Antriebs beim Vorschub des Maschinenkopfs (13, 14) sorgen. Sie kann z.B. als Schiebehülse auf der Antriebswelle (59) mit gegenseitiger Verzahnung ausgebildet sein. Diese ist bevorzugt als Passverzahnung mit gerader Zahnausrichtung längs der Maschinenachse (6) ausgebildet. Figur 5 und 6 zeigen diese Ausbildung.

In einer nicht dargestellten Alternative kann die axialtolerante Kupplung (80) eine gegenseitige Distanzierung von Maschinenkopf (13, 14) und Antriebsmotor (58) unter Aufhebung der Antriebsübertragung bewirken. In einem solchen Fall kann z.B. eine Schwungscheibenanordnung der Spindel (54) und dem Maschinenkopf (13, 14) zugeordnet sein.

Die Massenentkopplung (79) kann ferner eine lösbare Koppeleinrichtung (81) zwischen dem Spindelantrieb (56) und dem Maschinenkopf (13, 14) aufweisen. Die Koppeleinrichtung (81) kann dabei mit den Trägern (15, 16, 60) verbunden sein. Die Koppeleinrichtung (81) ist steuerbar und stellt eine lösbare mechanische Verbindung zwischen dem Maschinenkopf (13, 14) und dem zugehörigen Spindelantrieb (56) dar. Über die Koppeleinrichtung (81) kann der Maschinenkopf (13, 14) bei seinem Vorschub den Spindelantrieb (56) bedarfsweise mitbewegen oder abkoppeln bzw. entkoppeln.

Die Koppeleinrichtung (81) weist ein Koppelelement (82) mit veränderlicher Wirklänge auf. Dieses wirkt in Richtung der Maschinenachse (6). Es ist vorzugsweise als gerade Koppelstange ausgebildet. Alternativ ist eine andere konstruktive Ausbildung möglich.

Das Koppelelement (82) ist mit dem Maschinenkopf (13, 14) und dem zugehörigen Spindelantrieb (56) verbunden. Die Koppeleinrichtung (81) weist ferner eine lösbare Arretierung (83) für das Koppelelement (82) auf, die mit dem Spindelantrieb (56) und/oder dem Maschinenkopf (13, 14) verbunden ist.

In den gezeigten Ausführungsbeispielen ist die lösbare Arretierung (83) am Spindelantrieb (56), insbesondere am Antriebsträger (60), angeordnet und steht mit dem einen Endbereich des Koppelelements (82) in einem beweglichen und arretierbaren Eingriff. Das andere Ende des Koppelelements (82) ist am Maschinenkopf (13, 14), insbesondere an dessen Träger (15, 16) befestigt. Die vorgenannte Zuordnung kann auch umgekehrt sein.

Das Koppelelement (82) taucht in die Arretierung (83) ein oder durchdringt diese. Über eine Betätigung der Arretiereinrichtung (83) kann die besagte Koppelverbindung bedarfsweise geöffnet oder geschlossen werden. Die Arretiereinrichtung (83) kann in beliebig geeigneter Weise konstruktiv ausgebildet sein und kann z.B. mit Klemmschluss oder Formschluss arbeiten. In den gezeigten Ausführungsbeispielen ist sie als Stangenklemmung ausgebildet.

Der Spindelantrieb (56) kann ferner eine steuerbare Antriebsfixierung (84) aufweisen, mit der er bedarfsweise und temporär am Maschinenbett (12) fixiert werden kann. Die Antriebsfixierung (84) kann z.B. als Klemmeinrichtung am Antriebsträger (60) ausgebildet sein, die gegen das Maschinenbett (12) bzw. die Führung (32) wirkt und die mit der Maschinensteuerung verbunden ist.

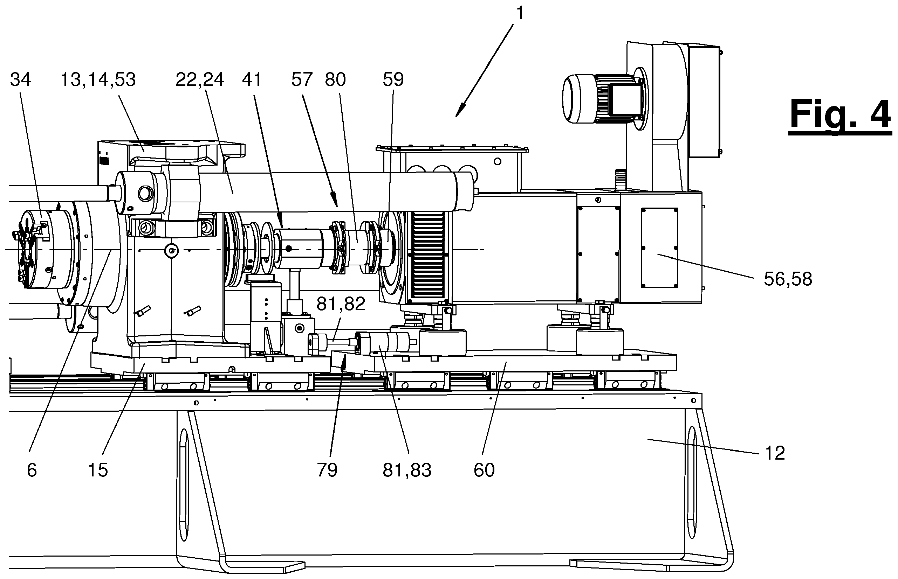

Zu Beginn des Pressschweißprozesses führt der Maschinenkopf (13, 14) einen axialen Zustellhub aus, bei dem die zu verschweißenden Bauteile (2, 3, 3', 4) aufeinander zubewegt und in Kontakt gebracht werden. Der Zustellhub kann in einem Eilgang erfolgen. Die Massenentkopplung (79) ist derart gesteuert, dass sie bei diesem Zustellhub eine Koppelverbindung zwischen dem Maschinenkopf (13, 14) und dem zugehörigen Spindelantrieb (56) herstellt, sodass diese gemeinsam bewegt werden. Die Arretierung (83) ist dabei geschlossen und die mechanische Koppelverbindung hergestellt. Figur 4 zeigt diese Betriebsstellung.

Am Ende des Zustellhubs wird die Antriebsfixierung (84) des Spindelantriebs (56) betätigt und die zuvor geschlossene Koppeleinrichtung (81) gelöst sowie die Kupplung (80) gestreckt. Dies bewirkt eine massentechnische Entkopplung, sodass beim anschließenden axialen Prozesshub der Maschinenkopf (13, 14) allein vom Stauchantrieb (22) bewegt wird. Diese Betriebsstellung ist in Figur 5 dargestellt.

Der Prozesshub kann mit geminderter Geschwindigkeit erfolgen. Er kann sich beim Reibschweißen in einen Reibvorschub (Reibphase) zum Plastifizieren und einen anschließenden Stauchvorschub (Stauchphase) zum Verbinden der plastifizierten Bauteilbereiche gliedern. Durch die Entkopplung und Massenreduzierung kann der Prozesshub exakter und feinfühliger ausgeführt werden.

Die Pressschweißvorrichtung (1) kann einen Bewegungsaufnehmer (nicht dargestellt) für den Maschinenkopf (13, 14) aufweisen. Hierüber werden die Fahroder Vorschubbewegungen des Maschinenkopfs (13, 14) aufgenommen. Bei der Bewegungsaufnahme kann eine Detektion von Geschwindigkeit und/oder Beschleunigung stattfinden. Der Bewegungsaufnehmer kann z.B. als Beschleunigungssensor ausgeführt sein. Er ist z.B. dem Maschinenkopf (13, 14) zugeordnet. Alternativ kann der Bewegungsaufnehmer an anderer Stelle, z.B. am Stauchantrieb (22) oder am am Maschinengestell (12) angeordnet sein. Er kann auch in anderer Weise ausgebildet sein.

Nach Beendigung des Prozesshubes wird der Maschinenkopf (13, 14) wieder in seine Ausgangsstellung zurückbewegt. Dabei kann in einer Zwischenposition der Spindelantrieb (56) wieder durch Schließen der Koppeleinrichtung (81) angekoppelt und für den restlichen Rückweg mitgenommen werden.

Die Halterung (11) für die Bauteile (2, 3, 3', 4) weist außer der Bauteilaufnahme (34, 35) am jeweiligen Maschinenkopf (13, 14) eine weitere Bauteilaufnahme (36, 37) auf, die zwischen dem Maschinenkopf (13, 14) und dem Stauch- oder Stützkopf (27) am Maschinengestell (12) beweglich angeordnet ist. Vorzugsweise ist die weitere oder zentrale Bauteilaufnahme (36, 37) längs der Maschinenachse (6) verfahrbar gelagert. Hierfür kann die jeweilige Bauteilaufnahme (36, 37) z.B. einen Träger (42, 43), insbesondere einen Schlitten aufweisen, der ebenfalls auf der Führung (32) längs verfahrbar gelagert ist.

Die weitere oder zentrale Bauteilaufnahme (36, 37) kann mittels einer steuerbaren Fixiereinrichtung (46) bedarfsweise am Maschinenbett (12), insbesondere an der Führung (32) durch Klemmung oder auf andere Weise fixiert werden. Die Fixiereinrichtung (46) weist z.B. eine federnd vorgespannte Klemmung gegen die Führung (32) auf, die hydraulisch gelöst werden kann.

Bei der in Figur 1 und 2 gezeigten Doppelkopfmaschine sind zwei solche zentrale Bauteilaufnahmen (36, 37) zwischen den endseitigen Maschinenköpfen (13, 14) angeordnet und nehmen gemeinsam ein zentrales und somit drittes Bauteil (3) auf. Bei der in Figur 3 gezeigten doppelten Einkopfmaschine ist jedem Maschinenkopf (13, 14) jeweils eine weitere oder zentrale Bauteilaufnahem (36, 37) zugeordnet, die ein einzelnes weiteres Bauteil (3, 3') aufnimmt. Bei der nicht dargestellten Einkopfmaschine sind ein Maschinenkopf (13) und eine weitere Bauteilaufnahme (36) vorhanden, wobei letztere ein weiteres Bauteil (3) aufnimmt.

Die Bauteilaufnahmen (34, 35, 36, 37) können das jeweilige Bauteil (2, 3, 3', 4) in beliebig geeigneter Weise aufnehmen. Vorzugsweise besitzen sie hierfür jeweils eine fernsteuerbare Spanneinrichtung (39) mit verstellbaren Spannelementen (40) und eine Betätigungseinrichtung (41). Die Spanneinrichtung (39) kann als Spannfutter, ggf. in ein- oder mehrstufiger Ausführung, oder als Zentrumsspanner oder in anderer Weise ausgebildet sein.

Die Staucheinrichtungen (8) wirken in den gezeigten Ausführungsbeispielen von Figur 1, 2 und 3 jeweils zwischen den Maschinenköpfen (13, 14) und dem bevorzugt zentralen Stauch- oder Stützkopf (27). Die Staucheinrichtung (8) entwickelt dabei Zugkräfte in Richtung der Maschinenachse (6). Sie weist einen Stauchantrieb (22) auf, der zwischen dem Maschinenkopf (13, 14) und dem Stauch- bzw. Stützkopf (27) angeordnet und mit beiden verbunden ist. Der Stauchantrieb (22) wirkt auf Zug und zieht die Komponenten (13, 14, 27) gegeneinander.

Der Stauchantrieb (22) kann in unterschiedlicher Weise ausgebildet sein. In den gezeigten Ausführungsbeispielen weist er zwei oder mehr parallele Antriebseinheiten (23, 24) auf, die längs der Maschinenachse (6) ausgerichtet sind. Die Antriebseinheiten (23, 24) sind an verschiedenen Seiten der Maschinenachse (6) angeordnet, insbesondere beidseits und einander diametral zur Maschinenachse (6) gegenüberliegen. Die Antriebseinheiten sind bevorzugt als Zylinder ausgebildet.

Die Antriebseinheiten (23, 24) können alternativ in anderer Weise, z.B. als elektrische Stangen- oder Spindelantriebe, ausgebildet sein. Die nachfolgend zu den gezeigten Zylindern (23, 24) erläuterten Anordnungen und Ausgestaltungen gelten entsprechend auch für andere Ausführungen von Antriebseinheiten.

Die Zylinder (23, 24) sind auf unterschiedlichen Höhen über dem Maschinenbett (12) angeordnet. Der dem Bedienbereich bzw. der Bedienseite (20) benachbarte Zylinder (23) ist dabei tief und knapp über der Oberseite des Maschinenbetts (12) angeordnet.

Die Zylinder (23, 24) sind vorzugsweise als hydraulische Zylinder ausgebildet. Sie weisen jeweils eine ausfahrbare Kolbenstange (26) und ein Zylindergehäuse (25) auf. Die Zylindergehäuse (25) sind bevorzugt am Maschinenkopf (13) montiert und abgestützt. Die freien Enden der Kolbenstangen (26) sind am Stauchkopf (27) befestigt. Bei anderen Antriebseinheiten können das Antriebsgehäuse (25) und das ausfahrbare Antriebselement (26), z.B. eine Zahnstange oder eine Gewindespindel, entsprechend angeordnet und verbunden sein.

Bei der Doppelkopfmaschine von Figur 1 und 2 kommt ein rahmen- oder bügelförmiger Stützkopf (27) zum Einsatz, der einen zentralen Durchlass (85) für das zentrale Werkstück (3) aufweist. Bei der doppelten Einkopfmaschine von Figur 3 ist ein Stauchkopf (27) vorhanden, der einen beidseitig wirkenden Stauchanschlag (28) für die Bauteile (3, 3') bietet. Dieser kann z.B. durch einen Einsatz (86) gebildet werden. Dieser kann fest oder lösbar am Stauchkopf (27) angeordnet sein. Er kann z.B. bedarfsweise im Durchlass (85) montierbar sein, so dass die Pressschweißvorrichtung (1) in einer Mehrfachfunktion wahlweise als Doppelkopfmaschine oder doppelte Einkopfmaschine betrieben werden kann.

Die Pressschweißvorrichtung (1) weist die besagte Betätigungseinrichtung (41) für die Bauteilaufnahme (34) am Maschinenkopf (13) auf. Sie wirkt bevorzugt auf das oder die Spannelement(e) (40). Die Betätigungseinrichtung (41) weist einen Betätigungsantrieb (65) auf, der zwischen dem Spindelantrieb (56) und der Spindel (54) im Antriebsstrang (57) angeordnet ist. Der Betätigungsantrieb (65) ist dabei vorzugsweise mitdrehend im Antriebsstrang (57) angeordnet. Figur 2 und 6 verdeutlichen diese Anordnung. Hierbei kann der Spindelantrieb (56), insbesondere der Antriebsmotor (58), als Direktantrieb fluchtend zur Maschinen- und Spindelachse (6) ausgerichtet sein, was Vorteile hinsichtlich der freien Motorwahl und der dadurch gegebenen Wirtschaftlichkeit mit sich bringt.

Die Betätigungseinrichtung (41) weist einen Betätigungsantrieb (65) mit einem in Figur 6 gezeigten Betätigungselement (66) auf, welches durch den Innenraum der hohlen Spindel (54) geführt ist und z.B. durch eine Axialbewegung auf die Stellmittel der Spannelemente (40) einwirkt. Der z.B. hydraulische oder elektrische Betätigungsantrieb (65) besitzt ein mantelförmiges Antriebsgehäuse (67), welches einerseits mit der Motorwelle (59) und andererseits mit dem Mantel der hohlen Spindel (54) drehfest verbunden ist und das Antriebsmoment des Spindelantriebs (65) verformungs- und verlustfrei überträgt.

Die Betätigungseinrichtung (41) weist ferner eine Drehzuführung (69) für Betriebsmittel, z.B. Hydraulikflüssigkeit oder elektrischen Strom, von außen zu dem mit der Spindel (54) drehenden Betätigungsantrieb (65) auf. Hierzu ist ein Anschluss für einen nicht dargestellten Schlauch oder ein Kabel an einem stationären Zuführgehäuse der Drehzuführung (69) angeordnet. Ferner sind externe Leitungen (70) für eine Leckölabfuhr sowie ein Anschlusskopf (72) vorgesehen, der zugleich eine Stützfunktion für die Drehzuführung (69) haben kann. Im Innenraum oder im Mantel der Spindel (54) können interne Leitungen zu den ggf. in der Spindel (54) angeordneten Abtriebselementen (66), z.B. einer Kolbenanordnung, verlegt sein.

Die Betätigungseinrichtung (41) ist leichtgewichtig und baut kompakt. Sie ist auf dem Träger (15, 16) des zugehörigen Maschinenkopfs (13, 14) angeordnet und wird zusammen mit diesem bewegt.

Im Antriebsstrang (57) zwischen dem Spindelantrieb (56) und der Spindel (54) kann eine Messeinrichtung (nicht dargestellt) mit einer Messwelle für die Erfassung des Antriebsmoments und ggf. der Antriebsdrehzahl angeordnet sein. Die Messeinrichtung kann zwischen die Motorwelle (59) und die Spindel (54) bzw. die Betätigungseinrichtung (41) geschaltet sein. Die Antriebs- oder Motorwelle (59) kann geteilt ausgebildet sein, wobei die Messwelle zwischen die Wellenhälften eingesetzt ist. Alternativ kann die Antriebs- oder Motorwelle (59) mit geeigneten Messelementen versehen sein und die Messwelle bilden.

Die Pressschweißvorrichtung (1) kann gemäß Figur 1 eine dem Maschinenkopf (13, 14) und/oder der weiteren Bauteilaufnahme (36, 37) zugeordnete Bearbeitungseinrichtung (18) für die Bearbeitung des Schweißteils (5, 5') nach dem Schweißprozess aufweisen. Die Bearbeitungseinrichtung (18) kann ggf. auch für eine Bearbeitung von ein oder mehreren noch zu verbindenden Bauteilen (2, 3, 3', 4) benutzt werden. Die Bearbeitungseinrichtung (18) ist z.B. als Abtrenneinrichtung, insbesondere als Abdreheinrichtung, oder als Stanze für den Schweißwulst ausgebildet.

Die Pressschweißvorrichtung (1) weist ferner eine Stelleinrichtung (17) auf, mit der eine Relativbewegung zwischen dem Maschinenkopf (13, 14) und der zugeordneten weiteren Bauteilaufnahme (36, 37) erzeugt wird. Diese Relativbewegung und die damit einher gehende Abstandsänderung zwischen dem Maschinenkopf (13, 14) und der Bauteilaufnahme (36, 37) kann für die Bearbeitung des Schweißteils (5, 5') oder ggf. eines Bauteils (2, 3, 3', 4) benutzt werden. Die Stelleinrichtung (17) kann mehrfach vorhanden sein.

Die Stelleinrichtung (17) kann in unterschiedlicher Weise ausgebildet und angeordnet sein. Bei den Varianten von Figur 1 und 3 sind zwei Stelleinrichtungen (17) vorhanden, wobei den zentralen Bauteilaufnahmen (36, 37) jeweils eine Stelleinrichtung (17) zugeordnet ist. Die einfache Einkopfmaschine hat nur eine Stelleinrichtung (17). Eine solche Ausführung mit einseitiger Bearbeitung ist auch bei Figur 1 und 3 möglich.

Die Stelleinrichtung (17) kann auf unterschiedliche Weise wirken. Sie kann einerseits die vorbeschriebene Relativbewegung und Abstandsänderung für die Bearbeitung bewirken. Sie kann andererseits für eine Längeneinstellung auf unterschiedliche Bauteile (2, 3, 3', 4) mit differierenden Bauteillängen dienen. Sie kann eine Kompensation von Einlegefehlern, Bauteiltoleranzen oder auch Bauteilelastizitäten im Schweißprozess bewirken.

Die Stelleinrichtung (17) weist eine steuerbare und längenveränderliche Koppeleinrichtung (48, 49) auf. Diese kann auch mehrfach vorhanden sein.

In den gezeigten Varianten von Figur 1 und 3 befindet sich eine Koppeleinrichtung (48) zwischen der zentralen Bauteilaufnahme (36, 37) und dem Stauch- oder Stützkopf (27). Sie bewirkt die Relativbewegung und Abstandsänderung für die Bearbeitung. Sie treibt dabei die Bauteilaufnahme (36, 37) an und bewegt sie relativ zum Stauch- oder Stützkopf (27), an dem sie sich andererseits gestellfest abstützt.

Ferner ist eine Koppeleinrichtung (48) zwischen dem Maschinenkopf (13, 14) und der zugeordneten weiteren Bauteilaufnahme (36, 37) angeordnet. Sie treibt und bewegt die Bauteilaufnahme (36, 37), wobei sie sich am Maschinenkopf (13, 14) abstützt. Diese Koppeleinrichtung (48) dient der Kompensation von Einlegefehlern, Bauteiltoleranzen oder auch Bauteilelastizitäten im Schweißprozess
Die Koppeleinrichtungen (48, 49) können gleichartig ausgebildet sein. Sie sorgen für eine Verbindung der Komponenten (13, 14, 27, 36, 37) in Richtung der Maschinenachse (6) und sind vorzugsweise mit deren jeweiligen Trägern (15, 16, 42, 43) verbunden.

Abwandlungen der gezeigten und beschriebenen Ausführungsbeispiele sind in verschiedener Weise möglich. Insbesondere können die Merkmale der verschiedenen Ausführungsbeispiele beliebig miteinander kombiniert und auch ausgetauscht werden. Der Stauchantrieb (22) kann in konventioneller Weise, z.B. gemäß des eingangs genannten Standes der Technik, ausgeführt sein und Druckkräfte entwickeln. Die Stelleinrichtung (17) kann nur eine Koppeleinrichtung (48, 49) zur besagten Relativbewegung für die Bearbeitung oder eine vertauschte Anordnung von Koppeleinrichtungen (48, 49) aufweisen. Eine einzelne Koppeleinrichtung kann außerdem bei entsprechender Ausbildung alle genannten Stellfunktionen übernehmen.

In einer nicht dargestellten Variante kann die Pressschweißvorrichtung (1) mehrere, z.B. zwei, drei oder mehr, zentrale Bauteilaufnahmen aufweisen, die gemeinsam das Bauteil (3) radial und axial fixieren sowie den Stauchdruck aufnehmen. Die Bauteilaufnahmen können stationär am Maschinengestell (12) angeordnet und abgestützt sein. Sie können den Stauchanschlag (28) ersetzen. Der Stützkopf (27) kann den erwähnten Durchlass (85) für ein sehr langes Bauteil (3) aufweisen. Eine Einkopfmaschine mit dieser Ausgestaltung hat einen erweiterten Einsatzbereich und kann auch für überlange Bauteile (3) benutzt werden.

### BEZUGSZEICHENLISTE

- 1: Pressschweißvorrichtung, Reibschweißvorrichtung
- 2: Bauteil
- 3: Bauteil
- 3': Bauteil
- 4: Bauteil
- 5: Schweißteil
- 5': Schweißteil
- 6: Längsachse, Maschinenachse
- 7: Plastifiziereinrichtung
- 8: Staucheinrichtung
- 9: Reibeinrichtung
- 10:
- 11: Halterung für Bauteile
- 12: Maschinengestell
- 13: Maschinenkopf
- 14: Maschinenkopf
- 15: Träger, Schlitten
- 16: Träger, Schlitten
- 17: Stelleinrichtung
- 18: Bearbeitungseinrichtung, Abdreheinrichtung
- 19: Betriebsmittelversorgung
- 20: Bedienbereich
- 21: Gehäuse
- 22: Stauchantrieb
- 23: Antriebseinheit, Zylinder
- 24: Antriebseinheit, Zylinder
- 25: Antriebsgehäuse, Zylindergehäuse
- 26: Antriebselement, Kolbenstange
- 27: Stauchkopf, Joch, Stützkopf
- 28: Stauchanschlag
- 29: Stütze
- 30:
- 31: Träger, Schlitten
- 32: Führung
- 33: Erfassungseinrichtung, Wegmesser

- 34: Bauteilaufnahme an Maschinenkopf
- 35: Bauteilaufnahme an Maschinenkopf
- 36: Bauteilaufnahme, Zentralaufnahme
- 37: Bauteilaufnahme, Zentralaufnahme
- 38: Bauteilabstützung, Lünette
- 39: Spanneinrichtung, Spannfutter
- 40: Spannelement
- 41: Betätigungseinrichtung für Bauteilaufnahme
- 42: Träger, Schlitten
- 43: Träger, Schlitten
- 44: Stütze
- 45: Lager, Gleitlager
- 46: Fixiereinrichtung
- 47: Erfassungseinrichtung, Wegmesser
- 48: Koppeleinrichtung für Zentralaufnahme/Stauchkopf
- 49: Koppeleinrichtung für Zentralaufnahme/Maschinenkopf
- 50: Koppelelement, Koppelstange
- 51: Arretierung, Stangenklemmung
- 52: Koppelsteller, Antrieb, Blockzylinder
- 53: Spindelstock
- 54: Spindel
- 55: Innenraum
- 56: Reibantrieb, Spindelantrieb
- 57: Antriebsstrang
- 58: Antriebsmotor, Direktantrieb
- 59: Welle, Motorwelle
- 60: Antriebsträger, Schlitten
- 61:
- 62: Kupplung, Drehkupplung
- 63:
- 64:
- 65: Betätigungsantrieb, Zylinder
- 66: Abtriebselement, Kolben, Spindel
- 67: Antriebsgehäuse
- 68: Betätigungselement, Betätigungsstange
- 69: Drehzuführung Betriebsmittel
- 70: Leitung, extern
- 71:
- 72: Anschlusskopf
- 73:
- 74:
- 75:
- 76:
- 77:
- 78:
- 79: Massenentkopplung
- 80: Kupplung in Antriebsstrang
- 81: Koppeleinrichtung
- 82: Koppelelement, Koppelstange
- 83: Arretierung
- 84: Antriebsfixierung
- 85: Durchlass
- 86: Einsatz, Stauchabstützung
- 87:
- 88:
- 89:
- 90:
- 91:

## Patentansprüche

1. Pressschweißvorrichtung mit einer Plastifizierungseinrichtung (7) und einer Staucheinrichtung (8) sowie Bauteilaufnahmen (34,35,36,37) für die zu verschweißenden Bauteile (2,3,3',4) und einem Maschinengestell (12), wobei die Pressschweißvorrichtung (1) einen beweglich am Maschinengestell (12) angeordneten Maschinenkopf (13, 14) mit einer drehbaren Spindel (54) und einer Bauteilaufnahme (34, 35) sowie einen zugehörigen Spindelantrieb (56) aufweist, **dadurch gekennzeichnet, dass** der Maschinenkopf (13, 14) und der Spindelantrieb (56) getrennt voneinander am Maschinengestell (12) angeordnet sind, wobei zwischen dem beweglich am Maschinengestell (12) angeordneten Spindelantrieb (56) und dem Maschinenkopf (13, 14) eine steuerbare Massenentkopplung (79) angeordnet ist.

2. Pressschweißvorrichtung nach Anspruch 1, **dadurch gekennzeichnet, dass** der Maschinenkopf (13, 14) und der Spindelantrieb (56) durch einen Antriebsstrang (57) verbunden sind, wobei die Massenentkopplung (79) eine axialtolerante Kupplung (80) im Antriebsstrang (57) aufweist.

3. Pressschweißvorrichtung nach Anspruch 1 oder 2, **dadurch gekennzeichnet, dass** der Maschinenkopf (13, 14) und ggf. der Spindelantrieb (56) entlang einer Maschinenachse (6) am Maschinengestell (12) hintereinander angeordnet und beweglich, insbesondere verfahrbar sind, wobei die Massenentkopplung (79) eine lösbare Koppeleinrichtung (81) zwischen dem Spindelantrieb (56) und dem Maschinenkopf (13, 14) aufweist.

4. Pressschweißvorrichtung nach einem der vorhergehenden Ansprüche, **dadurch gekennzeichnet, dass** das Koppelelement (82) mit dem Spindelantrieb (56) und dem Maschinenkopf (13, 14) verbunden und bevorzugt als Koppelstange, insbesondere mit veränderlicher Wirklänge, ausgebildet ist.

5. Pressschweißvorrichtung nach einem der vorhergehenden Ansprüche, **dadurch gekennzeichnet, dass** die Massenentkopplung (79) derart gesteuert ist, dass bei einem Zustellhub der Maschinenkopf (13, 14) und der bewegliche Spindelantrieb (56) für eine gemeinsame Bewegung gekoppelt sind und dass beim Prozesshub der Maschinenkopf (13, 14) vom Spindelantrieb (56) entkoppelt ist und eigenständig bewegt wird.

6. Pressschweißvorrichtung nach einem der vorhergehenden Ansprüche, **dadurch gekennzeichnet, dass** die Staucheinrichtung (8) einen zwischen dem Maschinenkopf (13, 14) und einem gestellfesten Stauch- oder Stützkopf (27) angeordneten und auf Zug wirkenden Stauchantrieb (22) mit zwei oder mehr parallelen Antriebseinheiten (23,24), insbesondere Hydraulikzylindern, aufweist, die längs und beidseitig neben der Maschinenachse (6) angeordnet sind.

7. Pressschweißvorrichtung nach einem der vorhergehenden Ansprüche, **dadurch gekennzeichnet, dass** zwischen dem Maschinenkopf (13, 14) und dem Stauch- oder Stützkopf (27) eine weitere Bauteilaufnahme (36, 37) beweglich am Maschinengestell (12) gelagert ist.

8. Pressschweißvorrichtung nach einem der vorhergehenden Ansprüche, **dadurch gekennzeichnet, dass** die Pressschweißvorrichtung (1) eine im Antriebsstrang (57) zwischen Spindelantrieb (56) und Spindel (54) angeordnete Betätigungseinrichtung (41) mit einem Betätigungsantrieb (65) für die Bauteilaufnahme (34,35) aufweist.

9. Pressschweißvorrichtung nach einem der vorhergehenden Ansprüche, **dadurch gekennzeichnet, dass** die Pressschweißvorrichtung (1) eine im Antriebsstrang (57) zwischen Spindelantrieb (56) und Spindel (54) angeordnete Messeinrichtung mit einer Messwelle für die Erfassung des Antriebsmoments und ggf. der Antriebsdrehzahl aufweist.

10. Pressschweißvorrichtung nach einem der vorhergehenden Ansprüche, **dadurch gekennzeichnet, dass** die Pressschweißvorrichtung (1) mehrere, insbesondere zwei Maschinenköpfe (13, 14) und mehrere, insbesondere zwei dazwischen angeordnete weitere zentrale Bauteilaufnahmen (36, 37) aufweist, wobei die Pressschweißvorrichtung (1) bevorzugt als Doppelkopfmaschine oder als einfache oder doppelte Einkopfmaschine ausgebildet ist.

11. Pressschweißvorrichtung nach einem der vorhergehenden Ansprüche, **dadurch gekennzeichnet, dass** die Pressschweißvorrichtung (1) als Reibschweißvorrichtung ausgebildet ist, wobei die Plastifizierungseinrichtung (7) eine Reibeinrichtung (9) aufweist oder als Schweißvorrichtung mit einem magnetisch bewegten Lichtbogen ausgebildet ist, wobei die Plastifizierungseinrichtung (7) eine Lichtbogeneinrichtung aufweist.

12. Verfahren zum Pressschweißen von Bauteilen (2, 3, 3', 4) mittels einer Pressschweißvorrichtung (1), welche eine Plastifizierungseinrichtung (7) und eine Staucheinrichtung (8) sowie Bauteilaufnahmen (34, 35, 36, 37) für die zu verschweißenden Bauteile (2, 3, 3', 4) und ein Maschinengestell (12) sowie einen beweglich am Maschinengestell (12) angeordneten Maschinenkopf (13, 14) mit einer drehbaren Spindel (54) und einer Bauteilaufnahme (34, 35) sowie einen zugehörigen Spindelantrieb (56) aufweist, **dadurch gekennzeichnet, dass** der Maschinenkopf (13, 14) und der Spindelantrieb (56) getrennt voneinander am Maschinengestell (12) angeordnet werden, wobei die bewegte Masse durch eine steuerbare Massenentkopplung (79) zwischen dem beweglich am Maschinengestell (12) angeordneten Spindelantrieb (56) und dem Maschinenkopf (13, 14) verringert wird.

13. Verfahren nach Anspruch 12, **dadurch gekennzeichnet, dass** das drehende Antriebsmoment mittels einer axialtoleranten Kupplung (80) auf den abgekoppelten Maschinenkopf übertragen wird.

14. Verfahren nach Anspruch 12 oder 13, **dadurch gekennzeichnet, dass** der beweglich, insbesondere längs der Maschinenachse (6) verfahrbar, am Maschinengestell (12) gelagerte Spindelantrieb (56) beim Zustellhub vom Maschinenkopf (13, 14) mitgenommen wird, wobei die Massenentkopplung und die Abstandsänderung bevorzugt erst beim Prozesshub stattfinden.

15. Verfahren nach einem der Ansprüche 12 bis 14, **dadurch gekennzeichnet, dass** der Maschinenkopf (13, 14) beim Zustell- und Prozesshub von einem Stauchantrieb (22) bewegt wird.

## Claims

1. Pressure welding apparatus having a plastification device (7) and an upsetting device (8) and also component holders (34, 35, 36, 37) for the components (2, 3, 3', 4) to be welded and a machine frame (12), wherein the pressure welding apparatus (1) has a machine head (13, 14) movably arranged on the machine frame (12) and having a rotatable spindle (54) and a component holder (34, 35) and an associated spindle drive (56), **characterized in that** the machine head (13, 14) and the spindle drive (56) are arranged separately from each other on the machine frame (12), a controllable mass decoupling means (79) being arranged between the spindle drive (56) movably arranged on the machine frame (12) and the machine head (13, 14).

2. Pressure welding apparatus according to Claim 1, **characterized in that** the machine head (13, 14) and the spindle drive (56) are connected by a drive train (57), wherein the mass decoupling means (79) has an axially tolerant coupling (80) in the drive train (57).

3. Pressure welding apparatus according to Claim 1 or 2, **characterized in that** the machine head (13, 14) and, optionally, the spindle drive (56) are arranged one beyond the other on the machine frame (12) along a machine axis (6) and are movable, in particular displaceable, wherein the mass decoupling means (79) has a detachable coupling device (81) between the spindle drive (56) and the machine head (13, 14).

4. Pressure welding apparatus according to one of the preceding claims, **characterized in that** the coupling element (82) is connected to the spindle drive (56) and the machine head (13, 14) and is preferably formed as a coupling rod, in particular with a variable effective length.

5. Pressure welding apparatus according to one of the preceding claims, **characterized in that** the mass decoupling means (79) is controlled in such a way that during a feed stroke the machine head (13, 14) and the movable spindle drive (56) are coupled for a common movement, and **in that** during the process stroke, the machine head (13, 14) is uncoupled from the spindle drive (56) and is moved independently.

6. Pressure welding apparatus according to one of the preceding claims, **characterized in that** the upsetting device (8) has an upsetting drive (22) with tensile action arranged between the machine head (13, 14) and an upsetting or supporting head (27) fixed to the frame and having two or more parallel drive units (23, 24), in particular hydraulic cylinders, which are arranged longitudinally and on both sides beside the machine axis (6).

7. Pressure welding apparatus according to one of the preceding claims, **characterized in that** a further component holder (36, 37) is movably mounted on the machine frame (12), between the machine head (13, 14) and the upsetting or supporting head (27) .

8. Pressure welding apparatus according to one of the preceding claims, **characterized in that** the pressure welding apparatus (1) has an actuating device (41) arranged in the drive train (57) between spindle drive (56) and spindle (54) and having an actuating drive (65) for the component holder (34, 35).

9. Pressure welding apparatus according to one of the preceding claims, **characterized in that** the pressure welding apparatus (1) has a measuring device arranged in the drive train (57) between spindle drive (56) and spindle (54) and having a measuring shaft for measuring the drive torque and optionally the drive speed.

10. Pressure welding apparatus according to one of the preceding claims, **characterized in that** the pressure welding apparatus (1) has a plurality of machine heads (13, 14), in particular two, and a plurality of further central component holders (36, 37), preferably two, arranged in between, wherein the Pressure welding apparatus (1) is preferably constructed as a double-head machine or as a single or double single-head machine.

11. Pressure welding apparatus according to one of the preceding claims, **characterized in that** the pressure welding apparatus (1) is constructed as a friction welding device, wherein the plastification device (7) has a friction device (9), or is formed as a welding device having a magnetically moved arc, wherein the plastification device (7) has an arc device.

12. Method for pressure welding of components (2, 3, 3', 4) by means of a Pressure welding apparatus (1) which has a plastification device (7) and an upsetting device (8) and also component holders (34, 35, 36, 37) for the components (2, 3, 3', 4) and a machine frame (12), and a machine head (13, 14) movably arranged on the machine frame (12) and having a rotatable spindle (54) and a component holder (34, 35) and an associated spindle drive (56), **characterized in that** the machine head (13, 14) and the spindle drive (56) are arranged separately from each other on the machine frame (12), wherein the moved mass is reduced by a controllable mass decoupling means (79) between the spindle drive (56) movably arranged on the machine frame (12) and the machine head (13, 14).

13. Method according to Claim 12, **characterized in that** the rotating drive torque is transmitted to the de-coupled machine head by means of an axially tolerant coupling (80).

14. Method according to Claim 12 or 13, **characterized in that** spindle drive (56) movably mounted on the machine frame (12), in particular displaceably along the machine axis (6), is carried along during the feed stroke of the machine head (13, 14), wherein the mass decoupling and the distance change preferably take place only during the press stroke.

15. Method according to one of Claims 12 to 14, **characterized in that** the machine head (13, 14) is moved during the feed and process stroke of an upsetting drive (22).

## Revendications

1. Dispositif de soudage sous pression comprenant un moyen de plastification (7) et un moyen de compression (8) ainsi que des logements (34, 35, 36, 37) destinés aux composants à souder (2, 3, 3', 4) et un bâti de machine (12), le dispositif de soudage sous pression (1) comportant une tête de machine (13, 14), disposée de manière mobile sur le bâti de machine (12) et pourvue d'une broche rotative (54) et d'un logement de composant (34, 35), ainsi qu'un entraînement de broche associé (56), **caractérisé en ce que** la tête de machine (13, 14) et l'entraînement de broche (56) sont disposés séparément l'un de l'autre sur le bâti de machine (12), un découplage de masse commandable (79) est prévu entre l'entraînement de broche (56) disposé de manière mobile sur le bâti de machine (12) et la tête de machine (13, 14) .

2. Dispositif de soudage sous pression selon la revendication 1, **caractérisé en ce que** la tête de machine (13, 14) et l'entraînement de broche (56) sont reliés par une transmission (57), le découplage de masse (79) comportant dans la transmission (57) un accouplement à tolérance axiale (80).

3. Dispositif de soudage sous pression selon la revendication 1 ou 2, **caractérisé en ce que** la tête de machine (13, 14) et éventuellement l'entraînement de broche (56) sont disposés l'un derrière l'autre sur le bâti de machine (12) le long d'un axe de machine (6) et sont mobiles, notamment déplaçables, le découplage de masse (79) comportant un moyen d'accouplement amovible (81) entre l'entraînement de broche (56) et la tête de machine (13, 14).

4. Dispositif de soudage sous pression selon l'une des revendications précédentes, **caractérisé en ce que** l'élément d'accouplement (82) est relié à l'entraînement de broche (56) et à la tête de machine (13, 14) et est conçu de préférence sous la forme d'une barre d'accouplement, ayant en particulier une longueur utile variable.

5. Dispositif de soudage sous pression selon l'une des revendications précédentes, **caractérisé en ce que** le découplage de masse (79) est commandé de telle sorte que, lors d'une course d'avance, la tête de machine (13, 14) et l'entraînement de broche mobile (56) soient accouplés en vue d'un mouvement commun et **en ce que**, lors de la course de processus, la tête de machine (13, 14) est découplée de l'entraînement de broche (56) et est déplacée indépendamment.

6. Dispositif de soudage sous pression selon l'une des revendications précédentes, **caractérisé en ce que** le moyen de compression (8) comporte un entraînement de compression (22) qui est disposé entre la tête de machine (13, 14) et une tête de compression ou de support (27) fixée au bâti, qui agit en traction et qui est munie d'au moins deux unités d'entraînement parallèles (23, 24), en particulier au moins deux vérins hydrauliques, qui sont disposés longitudinalement et des deux côtés près de l'axe de machine (6).

7. Dispositif de soudage sous pression selon l'une des revendications précédentes, **caractérisé en ce que**, entre la tête de machine (13, 14) et la tête de compression ou de support (27), un autre logement de composant (36, 37) est logé de manière mobile sur le bâti de machine (12).

8. Dispositif de soudage sous pression selon l'une des revendications précédentes, **caractérisé en ce que** le dispositif de soudage sous pression (1) comporte un moyen d'actionnement (41) qui est disposé dans la chaîne cinématique (57) entre l'entraînement de broche (56) et la broche (54) et qui comporte un entraînement d'actionnement (65) destiné au logement de composant (34, 35).

9. Dispositif de soudage sous pression selon l'une des revendications précédentes, **caractérisé en ce que** le dispositif de soudage sous pression (1) comporte un moyen de mesure qui est disposé dans la chaîne cinématique (57) entre l'entraînement de broche (56) et la broche (54) et qui est muni d'un arbre de mesure destiné à détecter le couple d'entraînement et éventuellement la vitesse de rotation de l'entraînement.

10. Dispositif de soudage sous pression selon l'une des revendications précédentes, **caractérisé en ce que** le dispositif de soudage sous pression (1) comprend une pluralité de têtes de machine (13, 14), en particulier deux, et une pluralité d'autres logements de composants centraux (36, 37), en particulier deux, qui sont disposés entre lesdites têtes de machine,
le dispositif de soudage sous pression (1) étant de préférence conçu comme une machine à double tête ou comme une simple ou double machine mono-tête.

11. Dispositif de soudage sous pression selon l'une des revendications précédentes, **caractérisé en ce que** le dispositif de soudage sous pression (1) est conçu comme un dispositif de soudage par friction, le dispositif de plastification (7) comportant un moyen de friction (9) ou étant conçu comme un dispositif de soudage pourvu d'un arc électrique à déplacement magnétique, le moyen de plastification (7) comportant un moyen à arc électrique.

12. Procédé de soudage sous pression de composants (2, 3, 3', 4) à l'aide d'un dispositif de soudage sous pression (1) qui comprend un dispositif de plastification (7) et un moyen de compression (8) ainsi que des logements (34, 35, 36, 37) destinés à des composants à souder (2, 3, 3', 4) et un bâti de machine (12) ainsi qu'une tête de machine (13, 14), disposée de manière mobile sur le bâti de machine (12) et pourvue d'une broche rotative (54), et un logement de composant (34, 35) ainsi qu'un entraînement de broche (56) associé, **caractérisé en ce que** la tête de machine (13, 14) et l'entraînement de broche (56) sont disposés séparément l'un de l'autre sur le bâti de machine (12), la masse déplacée étant réduite par un découplage de masse commandable (79) entre l'entraînement de broche (56), disposé de manière mobile sur le bâti de machine (12), et la tête de machine (13, 14).

13. Procédé selon la revendication 12, **caractérisé en ce que** le couple d'entraînement en rotation est transmis, à l'aide d'un accouplement à tolérance axiale (80), à la tête de machine désaccouplée.

14. Procédé selon la revendication 12 ou 13, **caractérisé en ce que** l'entraînement de broche (56), monté sur le bâti de machine (12) de manière mobile, notamment de manière déplaçable le long de l'axe de machine (6), est entraîné par la tête de machine (13, 14) lors de la course d'avance, le découplage de masse et la variation de distance ayant lieu de préférence uniquement pendant la course de processus.

15. Procédé selon l'une des revendications 12 à 14, **caractérisé en ce que** la tête de machine (13, 14) est déplacée par un entraînement de compression (22) pendant la course d'avance et de processus.
